# EUROPÄISCHE PATENTSCHRIFT

(11) **EP 2 868 043 B1**
(45) Veröffentlichungstag und Bekanntmachung des Hinweises auf die Patenterteilung: **10.08.2016**
(21) Anmeldenummer: 13732401.8
(22) Anmeldetag: 18.06.2013
(51) Int. Cl.: H04L 12/40, H02J 13/00, B60L 11/18, G05B 15/02, H01M 10/42

(54) **VERFAHREN ZUR DATENÜBERTRAGUNG ZWISCHEN ELEKTRONISCHEN STEUERGERÄTEN, BATTERIE UND KRAFTFAHRZEUG MIT EINER SOLCHEN BATTERIE**
METHOD FOR DATA TRANSFER BETWEEN ELECTRONIC CONTROL DEVICES, BATTERY AND MOTOR VEHICLE WITH SUCH A BATTERY
PROCÉDÉ DE TRANSMISSION DE DONNÉES ENTRE DES UNITÉS DE COMMANDE ÉLECTRONIQUES, BATTERIE ET VÉHICULE À MOTEUR ÉQUIPÉ D'UNE TELLE BATTERIE

(30) Priorität: 28.06.2012 DE 102012211125
(43) Veröffentlichungstag der Anmeldung: 06.05.2015
(73) Patentinhaber: Robert Bosch GmbH, 70442 Stuttgart (DE); Samsung SDI Co., Ltd., Gyeonggi-do 449-577 (KR)
(72) Erfinder: BECKER, Jens, 70597 Stuttgart (DE); BROCHHAUS, Christoph, 52072 Aachen (DE)
(74) Vertreter: Bee, Joachim
(86) Internationale Anmeldenummer: PCT/EP2013/062560
(87) Internationale Veröffentlichungsnummer: WO 2014/001135

(56) Entgegenhaltungen:
- WO-A2-02/21662
- WO-A2-2010/058013
- US-A1- 2002 145 537

## Beschreibung

Die Erfindung betrifft ein Verfahren zur Datenübertragung zwischen elektronischen Steuergeräten, eine Batterie und ein Batterie verbunden oder verbindbar mit dem elektrischen Antriebsmotor eines Kraftfahrzeugs , welche insbesondere einsetzbar sind zur Verringerung der Kommunikationslast auf dem Kommunikationsbus zwischen einem Hauptsteuergerät und einem oder mehreren untergeordneten Steuergeräten, insbesondere zwischen Steuergeräten eines Batteriemanagementsystems.

### Stand der Technik

Elektronische Steuergeräte werden im automobilen Umfeld in zunehmender Zahl eingesetzt (z. B.Motorsteuergeräte, Antiblockiersysteme, Airbag etc.). Für elektrisch angetriebene Fahrzeuge ist die Entwicklung von Batteriepacks mit einem zugehörigen Batteriemanagementsystem (BMS) notwendig. Ein BMS umfasst Steuergeräte mit Software zur Überwachung der Batteriefunktionalität. Abhängig von Kundenanforderungen oder vorhandenen Bauräumen sind die Topologien von Batteriepacks bezogen auf die Anzahl von Zellen, Modulen, Sensoren etc. sehr vielfältig.

Typische BMS gewährleisten die sichere und zuverlässige Funktion der Zellen und Packs. Sie überwachen und steuern Ströme, Spannungen, Temperaturen, Isolationswiderstand und andere Größen für die Zellen und den gesamten Batteriepack. Mit Hilfe dieser Größen lassen sich Managementfunktionen realisieren, welche die Lebensdauer, die Zuverlässigkeit und die Sicherheit des Batteriesystems steigern.

Ein BMS besteht aus einer Vielzahl von Steuergeräten, auf denen individuelle Softwarefunktionalitäten laufen. Abhängig von der Anzahl der Zellen, der Anzahl der Sensoren und der Verteilung der Batteriemodule auf verschiedene Bauräume im Fahrzeug ergibt sich eine Steuergerätetopologie mit einem Hauptsteuergerät und mehreren untergeordneten Sensorsteuergeräten für die Erfassung der Messdaten direkt an den einzelnen Batteriemodulen. Bei den Messdaten kann es sich z. B. um Spannungen, Temperaturen, Ströme etc. handeln. Die erfassten Daten werden zwischen den Steuergeräten über einen Kommunikationsbus, beispielsweise ein Controller Area Network (CAN), ausgetauscht.

Durch die Verwendung eines Kommunikationsbusses mit einer definierten Bandbreite ist das gesamte Datenaufkommen, das in einer bestimmten Zeit auf dem Bus transportiert werden kann, begrenzt. Eine geringe maximale Bandbreite verringert die Wahrscheinlichkeit von Störungen beispielsweise durch ungewollte elektrische oder elektromagnetische Effekte. Durch Verwendung einer hohen Anzahl von Batteriemodulen und zugehörigen Sensorsteuergeräten müssen alle Messdaten hochfrequent auf dem Bus zum Hauptsteuergerät kommuniziert werden. Die Messfrequenz wird somit durch die Bandbreite auf dem Bus und die Anzahl der Batteriemodule beschränkt.

Aus der Offenlegungsschrift DE 10 2004 046 621 A1 ist ein Verfahren und eine Vorrichtung zur Verarbeitung von Signalen von Batteriesensoren bekannt, wobei für zwei Messgrößen, insbesondere für Strom und Spannung, jeweils aus zwei aufeinanderfolgenden Messwerten einer Messgröße ein gleitender Mittelwert gebildet wird, wobei der N-te und N+1-te Wert der ersten Messgröße mit anderen Faktoren gewichtet wird als der N-te und N+1-te Wert der zweiten Messgröße.

Die US 2002 / 145537 A1 offenbart eine Methode zur drahtlosen Datenübermittlung von einem Messgerät mit der Möglichkeit, Datenvolumina durch das Prinzip der differenziellen Kompression zu reduzieren.

In der WO 02/21662 A2 wird ein Batterieüberwachungsnetzwerk beschrieben, welches von einem Batterieknotenpunk ausgehende verteilte Knotenpunkte aufweist, die mit Mess- und Verarbeitungsmitteln ausgestattet sind, um variable Batterieinformationen aufzunehmen und zu manipulieren und mit dem Batterieknotenpunkt zu kommunizieren.

### Offenbarung der Erfindung

Ein besonderer Vorteil der Erfindung besteht darin, dass die Anzahl von elektronischen Steuergeräten, die über einen Kommunikationsbus miteinander kommunizieren, im Vergleich zu den herkömmlichen Lösungen bei gleichbleibender Bandbreite des Kommunikationsbusses erhöht werden kann.

Bei dem Verfahren zur Datenübertragung kommunizieren mindestens ein elektronisches Hauptsteuergerät und mindestens ein untergeordnetes elektronisches Steuergerät über einen Kommunikationsbus zur Datenübertragung miteinander kommunizieren. Vorzugsweise kommuniziert eine Vielzahl von unterordneten elektronischen Steuergeräten mit einem elektronischen Hauptsteuergerät. Das mindestens eine untergeordnete elektronische Steuergerät detektiert vorgegebene Messgrößen, wobei die Messwerte von dem (den) untergeordneten Steuergerät(en) erfasst und verarbeitet werden. Die Verarbeitung umfasst die Ermittlung von aus den erfassten Messwerten abgeleiteten Daten. Die abgeleiteten Daten werden, anstelle der erfassten Messwerte, an das zumindest eine Hauptsteuergerät übertragen. Erfindungsgemäß wird die Auflösung für die abgeleiteten Daten, in Abhängigkeit der Messgröße, deren Messwerte erfasst werden, vorgegeben. Dadurch ergeben sich die Vorteile, dass das Datenvolumen reduziert wird und die von den abgeleiteten Daten belegte Bandbreite auf dem Kommunikationsbus gesteuert werden kann.

In einer bevorzugten Ausführungsform ist vorgesehen, dass das mindestens eine elektronische Hauptsteuergerät und das mindestens eine untergeordnete elektronische Steuergerät Komponenten eines BMS sind. Das mindestens eine untergeordnete elektronische Steuergerät umfasst mindestens einen Sensor, welcher vorgegebene Messgrößen, wie z. B. Strom, Spannung, Temperatur oder dergleichen, detektiert. Von dem (den) untergeordneten Steuergerät(en) wird (werden) die Messwerte erfasst und verarbeitet, wie beispielsweise digitalisiert.

In einer bevorzugten Ausführungsform ist vorgesehen, dass es sich bei den abgeleiteten Daten um die Differenz aus Messwerten von aufeinanderfolgenden Messungen einer Messgröße handelt. Vorzugsweise wird die Differenz aus zwei direkt aufeinanderfolgenden Messungen gebildet. Mit Hilfe eines bekannten Bezugswertes werden durch das Hauptsteuergerät aus den abgeleiteten Daten die erfassten Messwerte rekonstruiert. Da die abgeleiteten Daten ein geringeres Volumen als die vollständigen, erfassten Messwerte haben, wird durch die Übertragung der abgeleiteten Daten Bandbreite auf dem Kommunikationsbus frei, welche für zusätzliche Kommunikation genutzt werden kann.

Die von den abgeleiteten Daten belegte Bandbreite kann gemäß einer bevorzugten Ausführungsform gesteuert werden, indem für die abgeleiteten Daten eine Auflösung vorgegeben wird. Vorzugsweise wird die Auflösung in Abhängigkeit der erfassten Messgröße vorgegeben, sodass beispielsweise für sich schnell ändernde Messgrößen, wie z. B. Strom, eine größere Auflösung vorgegeben wird als für Messgrößen, die sich nur langsam ändern, wie z. B. die Temperatur von Batteriezellen. Für diese kann eine geringere Auflösung vorgegeben werden. In einer bevorzugten Ausführungsform ist vorgesehen, dass die für die Übertragung der abgeleiteten Daten erforderliche Bandbreite gesteuert wird durch entsprechende Vorgabe der Auflösung der abgeleiteten Daten und/oder die Häufigkeit der Übertragung der erfassten Messwerte vorgegeben wird. Durch die Steuerung kann beispielsweise vorgesehen sein, dass die Bandbreite des Kommunikationsbusses nicht vollständig durch die Übertragung der Messwerte bzw. abgeleiteten Daten genutzt wird, sodass ungenutzte Bandbreite (Puffer) zur Verfügung gestellt wird. Als vorteilhaft erweist es sich, wenn der Puffer für die Übertragung anderer Daten genutzt wird. Der Puffer kann beispielsweise genutzt werden für die Übertragung von Daten vom Hauptsteuergerät zu den untergeordneten Steuergeräten, beispielsweise zur Übertragung von Dienstanforderungen oder von Kontrollnachrichten.

Eine andere bevorzugte Ausführungsform sieht vor, dass als Bezugswert ein in einer früheren Messung erfasster Messwert dient. Als vorteilhaft erweist es sich, wenn zumindest ein Teil der untergeordneten Steuergeräte nach einer vorgebbaren Anzahl von abgeleiteten Daten einen in einer Messung erfassten Messwert überträgt. Somit kann aus dem in der Messung erfassten Messwert und aus den abgeleiteten Daten, die in nachfolgenden Messungen gebildet werden, jeweils die vollständigen, in den nachfolgenden Messungen erfassten Messwerte rekonstruiert werden. Als vorteilhaft erweist es sich dabei, wenn ein Teil der untergeordneten Steuergeräte abgeleitete Daten und der andere Teil der untergeordneten Steuergeräte erfasste Messwerte vollständig an das Hauptsteuergerät überträgt. Dadurch kann eine gleichmäßige Auslastung der Bandbreite erreicht werden. Vorzugsweise senden die untergeordneten Steuergeräte die abgeleiteten Daten und/oder erfasste Messwerte zyklisch.

Ein weiterer Aspekt der Erfindung betrifft eine Batterie, die mit zumindest einem Hauptsteuergerät und mindestens einem untergeordneten Steuergerät kombiniert ist, wobei das zumindest eine Hauptsteuergerät und das mindestens eine untergeordnete Steuergerät derart eingerichtet sind, dass ein Verfahren zur Datenübertragung ausführbar ist, wobei von dem mindestens einen untergeordneten Steuergerät Messwerte erfasst werden, durch das mindestens eine untergeordnete Steuergerät von zumindest einem Teil der erfassten Messwerte abgeleitete Daten gebildet und die abgeleiteten Daten an zumindest ein Hauptsteuergerät übertragen werden. Vorzugsweise handelt es sich bei der Batterie um eine Lithium-Ionen-Batterie oder die Batterie umfasst elektrochemische Zellen, die als Lithium-lonen-Batteriezellen ausgebildet sind.

Ein anderer Aspekt der Erfindung betrifft eine Batterie gemäß dem im voranstehenden Absatz beschriebenen Erfindungsaspekt, die mit einem elektrischen Antriebsmotor eines Kraftfahrzeugs verbunden oder verbindbar ist.. Die Batterie ist jedoch nicht auf einen solchen Einsatzzweck eingeschränkt, sondern kann auch in anderen elektrischen Systemen eingesetzt werden.

Durch Anpassung der Datenübertragung (nur die Differenzwerte werden übertragen) wird die maximale Anzahl der Sensorsteuergeräte bei gleichbleibender Bandbreite des Datenbusses erhöht und es können mehr Batteriemodule störungsfrei auf dem Datenbus kommunizieren. Beim vorgestellten Verfahren bleibt die Messgenauigkeit gegenüber der unveränderten Übertragung aller Messdaten erhalten.

Die Erfindung hat folgende Vorteile:
- Die genutzte Bandbreite wird reduziert, sodass der Datenbus nur zu einem geringeren Anteil genutzt wird und so weniger störanfällig ist.
- Es wird Platz für eine zusätzliche Kommunikation (Dienste) geschaffen, denn durch die geringere Ausnutzung des Busses kann eine zusätzliche Kommunikation auf dem Bus hinzugefügt werden, beispielsweise eine Dienstanforderung vom Hauptsteuergerät an die Sensorsteuergeräte.
- Es können mehr Sensoren über den Bus kommunizieren, da durch die geringere Buslast zusätzliche Steuergeräte auf dem Bus kommunizieren können. Somit kann die Gesamtzahl der Sensorsteuergeräte erhöht werden bei gleichbleibender Bandbreite.
- Es ergibt sich kein Genauigkeitsverlust, da regelmäßig die kompletten Datensätze übertragen werden. Somit können die Messdaten jederzeit ohne Genauigkeitsverlust aus den Differenzwerten berechnet werden.
- Das erfindungsgemäße Verfahren ist robust gegen einen Ausfall und/oder Störungen. Da regelmäßig auch vollständige Daten übermittelt werden, kann der Ausfall und/oder eine Störung der Übertragung von Differenzdaten ausgeglichen werden.
- Die Bandbreite der übertragenen Daten bzw. die Reduktion der benötigten Bandbreite kann einfach gesteuert werden,
   - indem die Auflösung der Differenzdaten festgelegt wird, vorzugsweise in Abhängigkeit der Art der erfassten Werte und/oder
   - indem die Häufigkeit der Übertragung der vollständigen Messwerte definiert wird.
- Durch eine mögliche Redundanz wird eine geringere Störanfälligkeit erreicht. Freiwerdende Buskapazitäten können für eine redundante Übertragung von Messdaten genutzt werden, um so die Störanfälligkeit zu verringern.

Vorteilhafte Weiterbildungen der Erfindung sind in den Unteransprüchen angegeben und in der Beschreibung beschrieben.

### Zeichnungen

Ausführungsbeispiele der Erfindung werden anhand der Zeichnungen und der nachfolgenden Beschreibung näher erläutert. Es zeigen:
Figur 1 eine Prinzipdarstellung der Anordnung von Steuergeräten in einem BMS,
Figur 2 die Veranschaulichung einer beispielhaften Messdatenkommunikation, und
Figur 3 die Veranschaulichung einer beispielhaften Rekonstruktion von vollständigen Messwerten aus abgeleiteten Daten (hier: Differenzen).

### Ausführungsformen der Erfindung

Nachfolgend soll die Erfindung am Beispiel von elektronischen Steuergeräten eines BMS näher erläutert werden. Dabei ist zu beachten, dass die Erfindung sich nicht auf die Datenübertragung zwischen den elektronischen Steuergeräten eines BMS beschränkt, sondern alle Ausführungsformen umfasst, welche nur die Merkmale der unabhängigen Ansprüche realisieren.

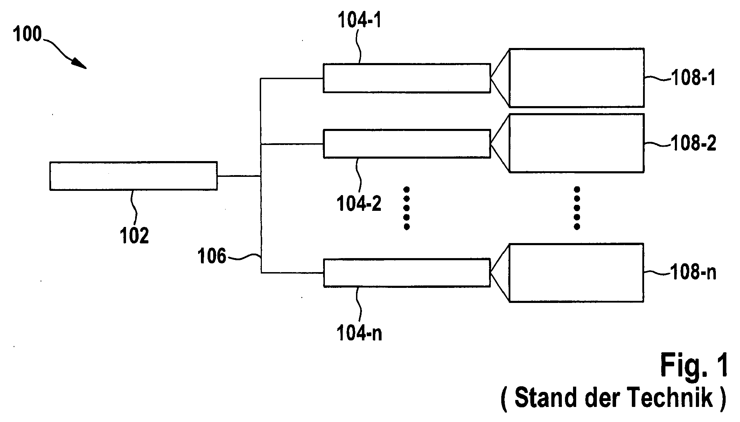

Figur 1 zeigt den prinzipiellen Aufbau eines BMS 100. Das beispielhafte BMS 100 umfasst ein Hauptsteuergerät 102 und mehrere untergeordnete Sensorsteuergeräte 104-1, 104-2, ... , 104-n. Die untergeordneten Sensorsteuergeräte 104-1, 104-2, ... , 104-n sind über einen Kommunikationsbus 106 mit dem Hauptsteuergerät 102 verbunden. Die untergeordneten Sensorsteuergeräte 104-1, 104-2, ... , 104-n umfassen Sensoren (nicht dargestellt), welche Messgrößen von Batteriemodulen 108-1, 108-2, ... , 108-n zur Zustandsüberwachung der Batterie detektieren.

Um die Bandbreite des Kommunikationsbusses 106 besser ausnutzen zu können, werden in der beispielhaften Ausführungsform Daten nicht immer mit der vollen Auflösung übertragen, sondern nur als Differenzwerte zu vorher kommunizierten Messwerten. Um die Stabilität des Systems zu garantieren, werden vorzugsweise in regelmäßigen Abständen die vollständigen Messwerte übertragen. Zusätzlich wird ein Puffer zur vollen Buslast gelassen, um beispielsweise Kontrollnachrichten vom Hauptsteuergerät 102 in Richtung der Sensorsteuergeräte 104-1, 104-2, ... , 104-n senden zu können.

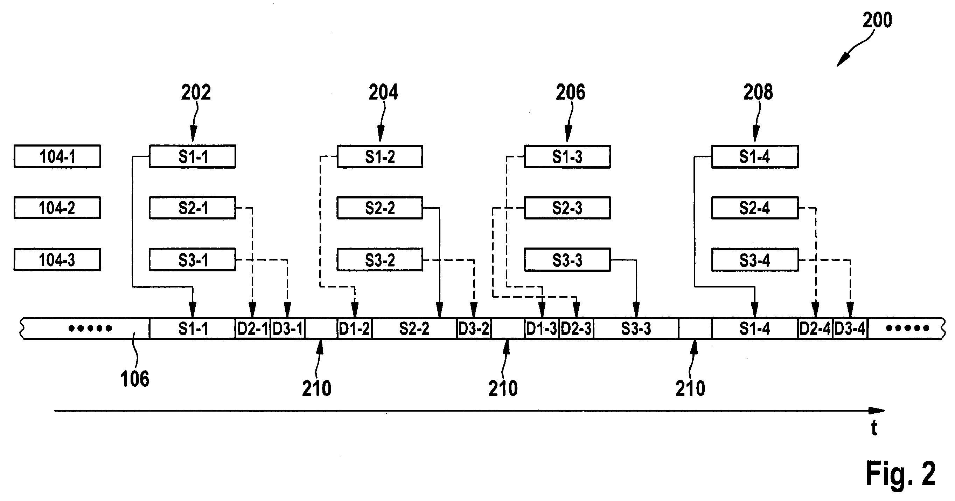

In Figur 2 ist ein BMS 200 mit einem Kommunikationsbus 106 wiedergegeben. Dieses beispielhafte BMS 200 umfasst ein nicht dargestelltes Hauptsteuergerät und drei Sensorsteuergeräte 104-1, 104-2, 104-3. Die Sensorsteuergeräte 104-1, 104-2, 104-3 führen regelmäßig Messungen durch und kopieren die Messdaten auf den Datenbus 106.

Bei der ersten Messung 202 werden Messdaten S1-1, S2-1 und S3-1 ermittelt. Das erste Sensorsteuergerät 104-1 übermittelt den kompletten Satz an Messdaten S1-1; die beiden anderen Sensorsteuergeräte 104-2 und 104-3 übermitteln nur die Differenzwerte D2-1 und D3-1 der letzten Messung 202 zur vorhergehenden Messung. Das Hauptsteuergerät übernimmt den Datensatz S1-1 des ersten Sensorsteuergeräts 104-1. Zusätzlich wird aus der vorherigen Messung und den Differenzwerten D2-1 und D3-1 des zweiten und dritten Sensorsteuergeräts 104-2 und 104-3 der vollständige Messdatensatz berechnet.

Bei der nachfolgenden zweiten Messung 204 werden wieder Messdaten S1-2, S2-2 und S3-2 ermittelt. Das erste und das dritte Sensorsteuergerät 104-1 und 104-3 übermitteln die Differenzwerte D1-2 und D3-2 zur vorhergehenden Messung 202. Das zweite Sensorsteuergerät 104-2 übermittelt den vollständigen Messdatensatz S2-2. Das Hauptsteuergerät übernimmt den Datensatz S1-2 des zweiten Sensorsteuergeräts 104-2. Zusätzlich wird aus der vorherigen Messung 202 und den Differenzwerten D1-1 und D3-1 des ersten und dritten Sensorsteuergeräts 104-1 und 104-3 der vollständige Messdatensatz berechnet.

In den nachfolgenden Messungen 206, 208, ... wird in der beispielhaften Ausführungsform zyklisch immer von einem der Sensorsteuergeräte 104-1, 104-2, 104-3 der vollständige Messdatensatz S3-3, S1-4 und von den beiden anderen Sensorsteuergeräten 104-1, 104-2, 104-3 die Differenzwerte D1-3, D2-3, D2-4, D3-4 aus der letzten und der vorangegangenen Messung an das Hauptsteuergerät übertragen.

Selbstverständlich können Ausführungsformen vorgesehen sein, bei denen für eine oder mehrere aufeinanderfolgende Messungen keine vollständigen Messdatensätze, sondern lediglich die Differenzwerte übertragen werden. Die Übertragung vollständiger Messdatensätze erfolgt dabei in größeren Abständen. Die Abstände sind dabei so gewählt, dass die erforderliche Genauigkeit der Messwertrekonstruktion aus den Differenzwerten stets gewährleistet ist. Die Abstände können daher für die verschiedenen Messgrößen unterschiedlich gewählt werden. So können beispielsweise die Abstände bei der Temperaturmessung größer gewählt werden als beispielsweise bei der Strommessung.

Es können Ausführungsformen vorgesehen sein, bei denen alle Sensorsteuergeräte 104-1, 104-2, 104-3 jeweils vollständige Datensätze oder Differenzwerte an das Hauptsteuergerät übertragen. Dies würde dazu führen, dass bei der Übertragung der Differenzwerte weniger Bandbreite durch die Datenübertragung von den Sensorsteuergeräten 104-1, 104-2, 104-3 zum Hauptsteuergerät beansprucht würde, wogegen bei einer zyklischen Übertragung der vollständigen Messdatensätze die Bandbreite gleichmäßiger ausgelastet wird.

Die Auflösung der Differenzdaten kann in Abhängigkeit der Art der Messgrößen gewählt werden.

Batteriezellspannungen ändern sich abhängig von der Batteriezellencharakteristik im Zeitintervall T nur um maximal x Volt. Modultemperaturen ändern sich wesentlich langsamer als Zellspannungen. Die Differenzwerte für die Temperatur können daher mit geringerer Auflösung als die Differenzwerte für die Batteriezellspannungen übertragen werden. Ströme ändern sich sehr schnell. Differenzwerte für Strom können daher nur wenig geringer aufgelöst als die vollständigen Werte übertragen werden.

Durch entsprechende Wahl der Auflösung in Abhängigkeit der Art der Messgrößen kann weitere Bandbreite auf dem Kommunikationsbus 106 eingespart werden.

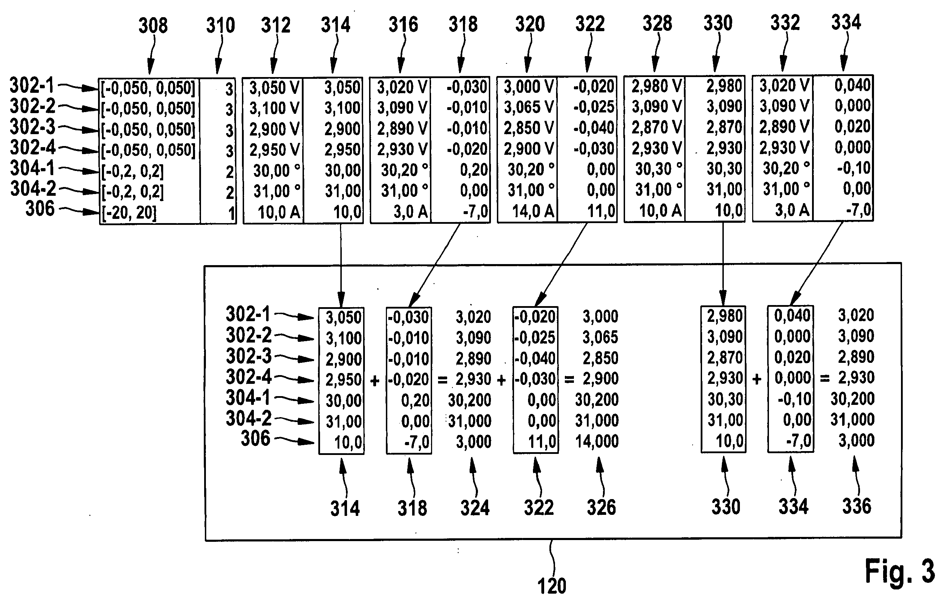

In Figur 3 wird veranschaulicht, welche Werte übertragen werden und wie die vollständigen Messwerte aus den übertragenen Differenzwerten rekonstruiert werden am Beispiel des ersten Sensorsteuergeräts 104-1. Durch die Sensoren des Sensorsteuergeräts 104-1 werden vier Zellspannungswerte 302-1, 302-2, 302-3, 302-4, zwei Temperaturwerte 304-1, 304-1 und ein Stromwert 306 erfasst. Für jeden der Werte ist die maximale Änderung 308 zwischen zwei Messungen und die jeweilige Auflösung 310 definiert. In dem vorliegenden Beispiel gibt die Auflösung die Anzahl der Nachkommastellen an. Die in der ersten Messung erfassten Werte 312 werden von dem Sensorsteuergerät 104-1 ausgewertet. Beispielsweise wird in Abhängigkeit der Stellung der Messung innerhalb des Zyklus der vollständige Datensatz oder es werden die Differenzwerte übertragen. In der beispielhaften ersten Messung werden die vollständigen Messwerte 314 auf den Kommunikationsbus 106 gegeben. Von den in der zweiten und dritten Messung ermittelten Messwerten 316, 320 wird die Differenz 318, 322 zu den Messwerten aus der ersten bzw. zweiten Messung gebildet, und es wird die Differenz 318, 322 auf den Kommunikationsbus 106 gegeben.

Im Hauptsteuergerät 102 werden die vollständigen Messwerte rekonstruiert. Im Einzelnen erfolgt das, indem die Differenzen 318, welche nach der zweiten Messung an das Hauptsteuergerät 102 übertragen wurden, zu den nach der ersten Messung an das Hauptsteuergerät 102 übertragenen vollständigen Messwerten addiert werden. Zu den so rekonstruierten Messwerten 324 der zweiten Messung werden anschließend die Differenzen 322, welche nach der dritten Messung an das Hauptsteuergerät 102 übertragen wurden, addiert, um so die rekonstruierten Messwerte 326 der zweiten Messung zu erhalten.

Als vorteilhaft erweist es sich, wenn die Auflösung der Differenzwerte so gewählt wird, dass ein Puffer 210 zur vollen Buslast gelassen wird. Dieser Puffer kann genutzt werden zur Übertragung zusätzlicher Signale, wie beispielsweise für Steuersignale vom Hauptsteuergerät zu den untergeordneten Steuergeräten.

In der beispielhaften Ausführungsform wird nach jeder dritten Messung erneut ein vollständiger Satz von Messwerten an das Hauptsteuergerät 102 übertragen. Daher entsprechen bei der vierten Messung die auf den Kommunikationsbus 106 gegebenen Werte 330 den bei der vierten Messung erfassten Werten 328, während bei der fünften Messung wieder die Differenzwerte 334 auf den Kommunikationsbus 106 gegeben werden, die aus den in der vierten und fünften Messung erfassten Werten 328, 332 gebildet wird.

Im Hauptsteuergerät 102 werden die vollständigen Messwerte 336 der fünften Messung wieder durch Addition der Differenzwerte 334 und der bei der vierten Messung an das Hauptsteuergerät 102 übertragenen vollständigen Messwerten 330 rekonstruiert.

Sollte beispielsweise die Übertragung der Werte 318 der zweiten Messung gestört werden, so lassen sich die Messwerte 316 nicht mehr rekonstruieren. Ebenfalls lassen sich die Werte 320 der dritten Messung nicht rekonstruieren, da diese auf den rekonstruierten Werten 324 der zweiten Messung basieren. Da regelmäßig auch die vollständigen Messwerte übertragen werden (hier wieder in der vierten Messung), sind nur die Messwerte bis zur vierten Messung nicht mehr herzustellen. Ab der vierten Messung läuft die Rekonstruktion der Werte dann wieder stabil.

Die Erfindung beschränkt sich in ihrer Ausführungsform nicht auf die vorstehend angegebenen bevorzugten Ausführungsbeispiele. Vielmehr ist eine Anzahl von Varianten denkbar, die von dem erfindungsgemäßen Verfahren, der erfindungsgemäßen Vorrichtung, der erfindungsgemäßen Batterie und der erfindungsgemäßen Batterie, die verbunden oder verbindbar ist mit dem elektrischen Antriebsmotor des Kraftfahrzeugs auch bei grundsätzlich anders gearteten Ausführungen Gebrauch macht.

## Patentansprüche

1. Verfahren zur Datenübertragung zwischen elektronischen Steuergeräten, wobei die Steuergeräte zumindest ein Hauptsteuergerät (102) und mindestens ein untergeordnetes Steuergerät (104-1, 104-2, ... , 104-n) umfassen, und wobei von dem mindestens einen untergeordneten Steuergerät (104-1, 104-2, ... , 104-n) Messwerte (312, 316, 320, 328, 332) erfasst werden und durch das mindestens eine untergeordnete Steuergerät (104-1, 104-2, ... , 104-n) von zumindest einem Teil der erfassten Messwerte (312, 316, 320, 328, 332) abgeleitete Daten gebildet werden und die abgeleiteten Daten an zumindest ein Hauptsteuergerät (102) anstelle der erfassten Messwerte über einen Kommunikationsbus zur Datenübertragung übertragen werden, **dadurch gekennzeichnet, dass** eine Auflösung für die abgeleiteten Daten, in Abhängigkeit der Messgröße, deren Messwerte (312, 316, 320, 328, 332) erfasst werden, vorgegeben wird.

2. Verfahren nach Anspruch 1, wobei es sich bei den abgeleiteten Daten um eine Differenz (318, 322, 334) aus Messwerten (312, 316, 320, 328, 332) von aufeinanderfolgenden Messungen handelt.

3. Verfahren nach einem der voranstehenden Ansprüche, wobei zumindest ein Teil der untergeordneten Steuergeräte (104-1, 104-2, ... , 104-n) nach einer vorgebbaren Anzahl von abgeleiteten Daten zumindest einen Teil der erfassten Messwerte (312, 316, 320, 328, 332) überträgt.

4. Verfahren nach einem der voranstehenden Ansprüche, wobei die für die Übertragung der abgeleiteten Daten erforderliche Bandbreite gesteuert wird durch entsprechende Vorgabe der Auflösung der abgeleiteten Daten und/oder die Häufigkeit der Übertragung der erfassten Messwerte (312, 316, 320, 328, 332) vorgegeben wird.

5. Verfahren nach einem der voranstehenden Ansprüche, wobei freie Bandbreite für die Übertragung zusätzlicher Daten, insbesondere für eine Übertragung von Daten von einem der Hauptsteuergeräte (102) zu einem der untergeordneten Steuergeräte (104-1, 104-2, ... , 104-n), vorgesehen wird.

6. Verfahren nach einem der Ansprüche 3 bis 5, wobei bei Vorhandensein mehrerer untergeordneter Steuergeräte (104-1, 104-2, ... , 104-n) die untergeordneten Steuergeräte (104-1, 104-2, ... , 104-n) zyklisch die erfassten Messwerte (312, 316, 320, 328, 332) übertragen.

7. Batterie, die mit zumindest einem Hauptsteuergerät (102) und mindestens einem untergeordneten Steuergerät (104-1, 104-2, ... , 104-n) kombiniert ist, wobei das zumindest eine Hauptsteuergerät (102) und das mindestens eine untergeordnete Steuergerät (104-1, 104-2, ... , 104-n) derart eingerichtet sind, dass ein Verfahren gemäß einem der Ansprüche 1 bis 6 ausführbar ist.

8. Batterie gemäß Anspruch 7, verbunden oder verbindbar mit einem elektrischen Antriebsmotor eines Kraftfahrzeugs.

## Claims

1. Method for data transmission between electronic controllers, wherein the controllers comprise at least one main controller (102) and at least one subordinate controller (104-1, 104-2, ..., 104-n), and wherein measured values (312, 316, 320, 328, 332) are acquired by the at least one subordinate controller (104-1, 104-2, ..., 104-n), and data derived from at least some of the acquired measured values (312, 316, 320, 328, 332) is compiled by the at least one subordinate controller (104-1, 104-2, ..., 104-n) and the derived data is transmitted to at least one main controller (102) instead of the acquired measured values via a communication bus for data transmission.

2. Method according to Claim 1, wherein the derived data is the difference (318, 322, 334) between measured values (312, 316, 320, 328, 332) from successive measurements.

3. Method according to any of the preceding claims, wherein at least some of the subordinate controllers (104-1, 104-2, ..., 104-n) transmit at least some of the acquired measured values (312, 316, 320, 328, 332) according to a predefinable number of derived data items.

4. Method according to any of the preceding claims, wherein the necessary bandwidth for transmitting the derived data is controlled by corresponding predefinition of the resolution of the derived data and/or the frequency of transmission of the acquired measured values (312, 316, 320, 328, 332) is predefined.

5. Method according to any of the preceding claims, wherein free bandwidth is provided for the transmission of additional data, in particular for transmission of data from one of the main controllers (102) to one of the subordinate controllers (104-1, 104-2, ..., 104-n).

6. Method according to any of Claims 3 to 5, wherein, if a plurality of subordinate controllers (104-1, 104-2, ..., 104-n) are present, the subordinate controllers (104-1, 104-2, ..., 104-n) transmit the acquired measured values (312, 316, 320, 328, 332) cyclically.

7. Battery, which is combined with at least one main controller (102) and at least one subordinate controller (104-1, 104-2, ..., 104-n), wherein the at least one main controller (102) and the at least one subordinate controller (104-1, 104-2, ..., 104-n) are set up such that a method according to any of Claims 1 to 6 can be performed.

8. Battery according to Claim 7 which is connected or connectable to an electric drive motor of a motor vehicle.

## Revendications

1. Procédé de transmission de données entre des contrôleurs électroniques, les contrôleurs comprenant au moins un contrôleur principal (102) et au moins un contrôleur subordonné (104-1, 104-2, ..., 104-n), et ,des valeurs mesurées (312, 316, 320, 328, 332) étant acquises par l'au moins un contrôleur subordonné (104-1, 104-2, ..., 104-n) et des données dérivées étant formées par l'au moins un contrôleur subordonné (104-1, 104-2, ..., 104-n) d'au moins une partie des valeurs mesurées (312, 316, 320, 328, 332) acquises et les données dérivées étant transmises à au moins un contrôleur principal (102) à la place des valeurs mesurées acquises par le biais d'un bus de communication servant à la transmission de données, **caractérisé en ce qu'**une résolution pour les données dérivées est prédéfinie en fonction de la grandeur mesurée dont les valeurs mesurées (312, 316, 320, 328, 332) sont acquises.

2. Procédé selon la revendication 1, les données dérivées étant une différence (318, 322, 334) entre les valeurs mesurées (312, 316, 320, 328, 332) de mesures successives.

3. Procédé selon l'une des revendications précédentes, au moins une partie des contrôleurs subordonnés (104-1, 104-2, ..., 104-n) transmettant au moins une partie des valeurs mesurées (312, 316, 320, 328, 332) acquises après un nombre pouvant être prédéfini de données dérivées.

4. Procédé selon l'une des revendications précédentes, la largeur de bande nécessaire pour la transmission des données dérivées étant commandée par une prédéfinition en conséquence de la résolution des données dérivées et/ou la périodicité de transmission des valeurs mesurées ( 312, 316, 320, 328, 332) acquises étant prédéfinie.

5. Procédé selon l'une des revendications précédentes, une largeur de bande libre étant prévue pour la transmission de données supplémentaires, notamment pour une transmission de données d'un contrôleur principal (102) à l'un des contrôleurs subordonnés (104-1, 104-2, ..., 104-n).

6. Procédé selon l'une des revendications 3 à 5, avec lequel, en présence de plusieurs contrôleurs subordonnés (104-1, 104-2, ..., 104-n), les contrôleurs subordonnés (104-1, 104-2, ..., 104-n) transmettent cycliquement les valeurs mesurées (312, 316, 320, 328, 332) acquises.

7. Batterie, qui est combinée avec au moins un contrôleur principal (102) et au moins un contrôleur subordonné (104-1, 104-2, ..., 104-n), l'au moins un contrôleur principal (102) et l'au moins un contrôleur subordonné (104-1, 104-2, ..., 104-n) étant configurés de telle sorte qu'un procédé selon l'une des revendications 1 à 6 peut être mis en oeuvre.

8. Batterie selon la revendication 7, reliée ou pouvant être reliée à un moteur de propulsion électrique d'un véhicule automobile.
